# EUROPEAN PATENT APPLICATION

(11) **EP 4 471 924 A1**
(43) Date of publication of application: **04.12.2024**
(21) Application number: 23771041.3
(22) Date of filing: 10.03.2023
(51) Int. Cl.: H01M 10/0567, H01M 4/525, H01M 4/505, H01M 10/052

(54) **LITHIUM SECONDARY BATTERY**

(30) Priority: 16.03.2022 KR 20220033019; 09.03.2023 KR 20230031448
(71) Applicant: LG Energy Solution, Ltd., Seoul 07335 (KR)
(72) Inventor: LEE, Jae Won, Daejeon 34122 (KR); LEE, Jung Hoon, Daejeon 34122 (KR); LEE, Chul Haeng, Daejeon 34122 (KR); KANG, Yoo Sun, Daejeon 34122 (KR); PARK, Sol Ji, Daejeon 34122 (KR)
(74) Representative: Hoffmann Eitle
(86) International application number: PCT/KR2023/003306
(87) International publication number: WO 2023/177162

(57) **Abstract**

The purpose of the present invention is to provide a lithium secondary battery of which high-temperature storability and high-temperature cyclability have been improved. The lithium secondary battery according to the present invention comprises a positive electrode, a negative electrode containing a silicon-based negative electrode active material, a separator interposed between the positive electrode and the negative electrode, and a non-aqueous electrolyte solution containing a lithium salt, an organic solvent, and an additive, wherein the additive may include a compound represented by chemical formula 1.

## Description

### TECHNICAL FIELD

### Cross-reference to Related Applications

This application claims priority from Korean Patent Application Nos. 10-2022-0033019, filed on March 16, 2022,and 10-2023-0031448, filed on March 9, 2023, the disclosures of which are incorporated by reference herein.

### Technical Field

The present disclosure relates to a lithium secondary battery with improved high-temperature storage characteristics and high-temperature cycle characteristics.

### BACKGROUND ART

While an increase in production of electrical energy is required as dependence on the electrical energy is gradually increasing in modern society, development of a large-capacity power storage device capable of stably supplying power has emerged.

A lithium-ion battery is in the spotlight as a device exhibiting the highest energy density among commercialized power storage devices.

The lithium-ion battery is composed of a positive electrode formed of a transition metal oxide containing lithium, a negative electrode capable of storing the lithium, an electrolyte solution that includes an organic solvent containing a lithium salt, and a separator.

With respect to the positive electrode among them, energy is stored through a redox reaction of transition metal, wherein this results in the fact that the transition metal must be essentially included in a positive electrode material.

However, there is a problem in that the transition metal is dissolved due to collapse of a specific positive electrode structure during repeated charge and discharge, or the transition metal is dissolved by an acid which is formed by hydrolysis/thermal decomposition of the lithium salt or a side reaction of the electrolyte solution under a high operating potential. The dissolved transition metal is known as a factor that not only increases resistance of the positive electrode by being re-deposited on the positive electrode, but also causes self-discharge of the negative electrode by being electrodeposited on the negative electrode through the electrolyte solution and increases interfacial resistance of the negative electrode while promoting an additional electrolyte solution decomposition reaction by destruction of a solid electrolyte interphase (SEI) film on a surface of the negative electrode.

Furthermore, in a case in which a silicon-based negative electrode active material is used as a negative electrode component of the lithium-ion battery, since the SEI film is lost due to electrode expansion as the cycle progresses, this may lead to an increase in resistance and an increase in electrolyte solution side reaction, and thus, such a problem may cause damage to an electrode structure.

Thus, there is a need for research into a method capable of preventing degradation of a secondary battery by forming a robust passivation film on the surface of the electrode.

### DISCLOSURE OF THE INVENTION

### TECHNICAL PROBLEM

An aspect of the present disclosure provides a lithium secondary battery in which high-temperature storage characteristics and high-temperature cycle characteristics are improved by including a non-aqueous electrolyte solution containing an additive capable of forming a robust film on a surface of an electrode.

### TECHNICAL SOLUTION

In an embodiment of the present disclosure, there is provided a lithium secondary battery including:
a positive electrode,
a negative electrode including a silicon-based negative electrode active material,
a separator disposed between the positive electrode and the negative electrode, and
a non-aqueous electrolyte solution containing a lithium salt, an organic solvent, and an additive,
wherein the additive includes a compound represented by Formula 1.

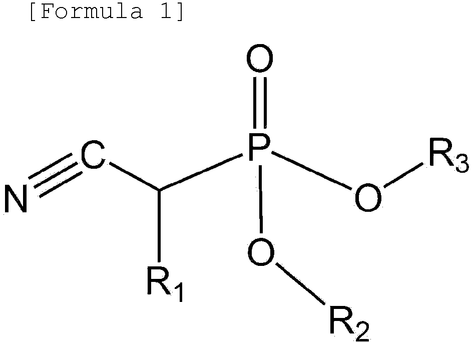

wherein, in Formula 1,
R₁ to R₃ are each independently hydrogen or an alkyl group having 1 to 10 carbon atoms.

The silicon-based negative electrode active material may be at least one selected from the group consisting of silicon, silicon chloride, silicon oxide (SiOₓ 0<x<2), and a silicon-carbon composite (SiC). Specifically, the silicon-based negative electrode active material may be the silicon oxide.

The negative electrode may further include a carbon-based negative electrode active material.

In this case, a mixing ratio of the silicon-based negative electrode active material to the carbon-based negative electrode active material may be in a range of 1:99 to 20:80, specifically, 1:99 to 10:90, as a weight ratio.

The positive electrode may include a positive electrode active material which includes lithium and at least one metal selected from the group consisting of nickel (Ni), cobalt (Co), manganese (Mn), and aluminum (Al).

In Formula 1, R₁ to R₃ may each independently be an alkyl group having 1 to 8 carbon atoms. Specifically, in Formula 1, R₁ may be an alkyl group having 1 to 5 carbon atoms, and R₂ and R₃ may each independently be an alkyl group having 2 to 6 carbon atoms. More specifically, in Formula 1, R₁ may be an alkyl group having 1 to 3 carbon atoms, and R₂ and R₃ may each independently be an alkyl group having 2 to 5 carbon atoms.

The compound represented by Formula 1 may be present in an amount of 0.1 wt% to 5.0 wt% based on a total weight of the non-aqueous electrolyte solution.

### ADVANTAGEOUS EFFECTS

The present disclosure aims at providing a lithium secondary battery in which, since a negative electrode including a silicon-based negative electrode active material is used in combination with a non-aqueous electrolyte solution that contains a compound containing a phosphonate (-PO(OR)₂) functional group in its structure as an additive, a robust inorganic component film may be formed on a surface of the negative electrode including the silicon-based negative electrode active material to prevent degradation of the battery, and, as a result, excellent cycle characteristics and high-temperature storage stability may be achieved.

### MODE FOR CARRYING OUT THE INVENTION

Hereinafter, the present disclosure will be described in more detail.

Words or terms used in the specification and claims are only used to describe exemplary embodiments, and are not intended to limit the present disclosure.

For example, the terms "include," "comprise," or "have" in this specification specify the presence of stated features, numbers, steps, elements, or combinations thereof, other parts may be added unless 'only' is used.

Also, in the present specification, the expression "%" denotes wt% unless explicitly stated otherwise.

Unless otherwise defined in the specification, the expression "substitution" denotes that at least one hydrogen bonded to carbon is substituted with an element other than hydrogen, for example, an alkyl group having 1 to 5 carbon atoms or a fluorine element.

In general, passivation performances of a solid electrolyte interphase (SEI) film formed on a surface of a negative electrode by electrolyte solution decomposition and a cathode electrolyte interphase (CEI) film formed on a surface of a positive electrode in a high potential state are factors that greatly affect the improvement of storage performance of a secondary battery. A Lewis acid material, which is formed by thermal decomposition of a lithium salt (LiPF₆) widely used in lithium-ion batteries, is known to cause degradation of these negative electrode film (SEI) and positive electrode film (CEI) . That is, a side reaction with the electrolyte solution is caused when the surface of the positive electrode is degraded by the attack of the Lewis acid material, and, since transition metal dissolution occurs accordingly to change a local structure of the surface of the positive electrode, surface resistance of the electrode may be increased and capacity may be decreased. Also, transition metal ions are dissolved from the positive electrode due to a structural change of the positive electrode which is caused by repeated charge and discharge, and, since the dissolved transition metal ions move to the negative electrode through the electrolyte solution and are then electro-deposited on the negative electrode to self-discharge the negative electrode and destruct the film (SEI), an additional electrolyte solution decomposition reaction is promoted to increase interfacial resistances of the negative electrode and the positive electrode.

The present disclosure aims at providing a lithium secondary battery in which excellent cycle characteristics and high-temperature storage stability may be achieved by using a negative electrode including a silicon-based negative electrode active material in combination with a non-aqueous electrolyte solution that contains an additive capable of suppressing degradation of the positive electrode and the negative electrode during rapid charge by forming a robust film on the surface of the negative electrode and the surface of the positive electrode.

### Lithium Secondary Battery

According to an embodiment of the present disclosure, a lithium secondary battery of the present disclosure includes:
a positive electrode,
a negative electrode including a silicon-based negative electrode active material,
a separator disposed between the positive electrode and the negative electrode, and
a non-aqueous electrolyte solution containing a lithium salt, an organic solvent, and an additive,
wherein the additive may include a compound represented by Formula 1 below.

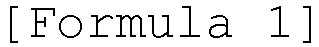

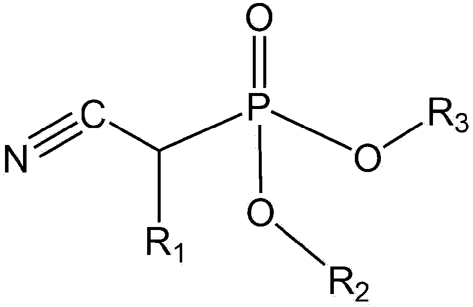

wherein, in Formula 1,
R₁ to R₃ are each independently hydrogen or an alkyl group having 1 to 10 carbon atoms.

Hereinafter, a configuration of the lithium secondary battery of the present disclosure will be described in detail.

### (1) Positive Electrode

The positive electrode according to the present disclosure may include a positive electrode active material, and may further include a conductive agent and/or a binder, if necessary.

The positive electrode active material is a compound capable of reversibly intercalating and deintercalating lithium, wherein the positive electrode active material may specifically include a lithium transition metal oxide represented by the following Formula 2 which includes lithium and at least one metal selected from the group consisting of nickel (Ni), cobalt (Co), manganese (Mn), and aluminum (Al).

[Formula 2] Li₁₊ₐNiₓCo_{y}M¹_{z}M²_{w}O₂

In Formula 1,
M¹ is Mn, Al, or a combination thereof,
M² is at least one selected from the group consisting of Al, zirconium (Zr), tungsten (W), titanium (Ti), magnesium (Mg), calcium (Ca), and strontium (Sr), and 0≤a≤0.5,0<x≤0.6,0<y≤0.4, 0<z≤0.4,and 0≤w≤0.1.

1+a represents an atomic fraction of lithium in the lithium transition metal oxide, wherein a may satisfy 0≤a≤0.5, preferably 0≤a≤0.2, and more preferably 0≤a≤0.1.When the atomic fraction of the lithium satisfies the above range, a crystal structure of the lithium transition metal oxide may be stably formed.

x represents an atomic fraction of nickel among total transition metal elements in the lithium transition metal oxide, wherein x may satisfy 0<x≤0.6, particularly 0.55<x<1.0, and more particularly 0.6≤x≤0.98, for example, 0.6≤x≤0.95. When the atomic fraction of the nickel satisfies the above range, high energy density may be exhibited to achieve high capacity.

y represents an atomic fraction of cobalt among the total transition metal elements in the lithium transition metal oxide, wherein y may satisfy 0<y≤0.4, particularly 0<y≤0.3, and more particularly 0.05≤y≤0.3. When the atomic fraction of the cobalt satisfies the above range, good resistance characteristics and output characteristics may be achieved.

z represents an atomic fraction of M¹ element among the total transition metal elements in the lithium transition metal oxide, wherein z may satisfy 0<z≤0.4, preferably 0<z≤0.3, and more preferably 0.01≤z≤0.3.When the atomic fraction of the element M¹ satisfies the above range, structural stability of the positive electrode active material is excellent.

w represents an atomic fraction of M² element among the total transition metal elements in the lithium transition metal oxide, wherein w may satisfy 0<w≤0.1,preferably 0<w≤0.05, and more preferably 0<w≤0.02.

Specifically, the positive electrode active material may include a lithium composite transition metal oxide, such as Li (Ni_{0.6}Mn_{0.2}Co_{0.2})O₂,Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂, in which a Ni content is 0.55 atm% or more, in order to achieve a high-capacity battery.

Also, the positive electrode active material of the present disclosure may use lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (0<Y<1), LiMn_{2-Z}Ni_{Z}O₄ (0<Z<2)), lithium-nickel-cobalt-based oxide (e.g., LiNi_{1-Y1}Co_{Y1}O₂ (0<Y1<1)), lithium-manganese-cobalt-based oxide (e.g. , LiCo_{1-Y2}Mn_{Y2}O₂ (0<Y2<1), LiMn_{2-Z1}Co_{Z1}O₄ (0<Z1<2)), or Li (Niₚ₁Co_{q1}Mnᵣ₂)O₄(0<p1<2, 0<q1<2, 0<r2<2, and p1+q1+r2=2) in combination with the lithium transition metal oxide represented by Formula 2.

Next, the conductive agent is used to provide conductivity to the electrode, wherein any conductive agent may be used without particular limitation as long as it has suitable electron conductivity without causing adverse chemical changes in the battery. Specific examples of the conductive agent may be a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, and any one thereof or a mixture of two or more thereof may be used.

Next, the binder improves the adhesion between positive electrode active material particles and the adhesion between the positive electrode active material and a current collector.

As an example of the binder, any one of a fluorine resin-based binder including polyvinylidene fluoride (PVDF) or polytetrafluoroethylene (PTFE); a rubber-based binder including a styrenebutadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder or a mixture of two or more thereof may be used.

The positive electrode of the present disclosure may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled, or a method in which the positive electrode slurry is cast on a separate support to be formed in the form of a film and the film separated from the support is then laminated on the positive electrode collector.

The positive electrode active material may be included in an amount of 80 wt% to 98 wt%, more specifically, 85 wt% to 98 wt% based on a total weight of the positive electrode slurry. When the positive electrode active material is included in an amount within the above range, excellent capacity characteristics may be exhibited.

The conductive agent may be included in an amount of 0.1 wt% to 10 wt%, preferably, 0.1 wt% to 5 wt% based on the total weight of the positive electrode slurry, and the binder may be included in an amount of 0.1 wt% to 15 wt%, preferably, 0.1 wt% to 10 wt% based on a total weight of a positive electrode active material layer.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

The negative electrode according to the present disclosure includes a negative electrode active material, and may further include a conductive agent and/or a binder, if necessary.

As the negative electrode active material, a silicon-based negative electrode active material used in the art may be used, and, in addition, a mixture of a carbon-based negative electrode active material with the silicon-based negative electrode active material may be used.

The silicon (Si)-based negative electrode active material, for example, may include at least one selected from the group consisting of silicon (Si), silicon carbide (SiC), silicon chloride, silicon oxide (SiOₓ, where 0<x<2), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, barium (Ba), radium (Ra), scandium (Sc), yttrium (Y), Ti, Zr, hafnium (Hf), rutherfordium (Rf), vanadium (V), niobium (Nb), tantalum (Ta), dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), Ti, germanium (Ge), phosphorus (P), arsenic (As), antimony (Sb), bismuth (Bi), sulfur (S), selenium (Se), tellurium (Te), polonium (Po), and a combination thereof.

Specifically, the negative electrode active material may include silicon oxide (SiO) which is composed of silicon dioxide (SiO₂) and amorphous silicon in a mixing ratio of 1:1 based on a weight ratio.

The silicon-based negative electrode active material may obtain higher capacity characteristics than the carbon-based negative electrode active material. However, with respect to a negative electrode including the silicon-based negative electrode active material, an SEI film containing more oxygen (O)-rich components than a graphite negative electrode is formed on a surface thereof by a reaction with the non-aqueous electrolyte solution during initial charge and discharge, wherein the SEI film may be easily decomposed, when a Lewis acid, such as HF or PF₅, is present in the electrolyte solution, to cause a side reaction of the electrolyte solution or to cause consumption of the electrolyte solution. Thus, in a case in which the silicon-based negative electrode active material is used as a negative electrode component, it is important to form a robust SEI film containing an inorganic component in order to suppress degradation of Si due to HF. That is, in a case in which the negative electrode including the silicon-based negative electrode active material is used, the non-aqueous electrolyte solution used in combination is required to contain an additive capable of suppressing the formation of the Lewis acid, such as HF or PF₅, in the electrolyte solution or scavenging the formed Lewis acid and simultaneously forming an inorganic film, in order to stably maintain the SEI film.

Also, as the carbon-based negative electrode active material which may be used in combination with the silicon-based negative electrode active material, various carbon-based negative electrode active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

The silicon-based negative electrode active material and the carbon-based negative electrode active material may be mixed in a weight ratio of 1:99 to 20:80 and used. In a case in which the mixing ratio of the silicon-based negative electrode active material to the carbon-based negative electrode active material is satisfied, since a volume expansion of the silicon-based negative electrode active material is suppressed while capacity characteristics are improved, excellent cycle performance of the battery may be secured and high capacity may be achieved. If, in a case in which the mixing ratio of the silicon-based negative electrode active material is less than 1 as a weight ratio, since it is difficult to increase the energy density, it is difficult to achieve a high-capacity battery, and, in a case in which the mixing ratio of the silicon-based negative electrode active material is greater than 20 as a weight ratio, a degree of volume expansion of the negative electrode may be increased. Specifically, the mixing ratio of the silicon-based negative electrode active material to the carbon-based negative electrode active material may be in a range of 1:99 to 10:90, particularly 3:97 to 5:95, and more particularly 5:95 to 3:9, as a weight ratio.

Next, the conductive agent is a component for further improving conductivity of the negative electrode active material, wherein any conductive agent may be used without particular limitation so long as it has conductivity without causing adverse chemical changes in the battery. Specifically, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used as the conductive agent, and the conductive agent may be the same as or different from the conductive agent used in the positive electrode.

The binder is a component that assists in the binding between the conductive agent, the active material, and the current collector, wherein representative examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; polyolefin-based binder including polyethylene or polypropylene; a polyimide-based binder; a polyester-based binder; and a silane-based binder, and the binder may be the same as or different from the binder used in the positive electrode.

The negative electrode may be prepared according to a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, then dried and rolled, or may be prepared by casting the negative electrode slurry on a separate support to be formed in the form of a film and then laminating the film separated from the support on the negative electrode collector.

The negative electrode active material may be included in an amount of 80 wt% to 99 wt% based on a total weight of the negative electrode slurry. In a case in which the amount of the negative electrode active material satisfies the above range, excellent capacity characteristics and electrochemical properties may be obtained.

The conductive agent may be added in an amount of 10 wt% or less, preferably, 5 wt% or less based on the total weight of the negative electrode slurry, and the binder may be included in an amount of 0.1 wt% to 15 wt%, preferably, 0.1 wt% to 10 wt% based on the total weight of the negative electrode slurry.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount ofthe solvent used may be sufficient if the negative electrode slurry may be adjusted to have appropriate viscosity in consideration of a coating thickness of the negative electrode material mixture, manufacturing yield, and workability, and is not particularly limited.

### (3) Separator

The lithium secondary battery according to the present disclosure includes a separator between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for the electrolyte solution as well as low resistance to the transfer of ions of the lithium salt is preferred.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### (4)Non-aqueous Electrolyte Solution

The lithium secondary battery according to the present disclosure includes a non-aqueous electrolyte solution containing a lithium salt, an organic solvent, and an additive.

### (4-1) Lithium Salt

First, in the non-aqueous electrolyte solution of the present disclosure, any lithium salt typically used in a non-aqueous electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl) imide, LiFSI), LiN(SO₂CF₂CF₃)₂ (lithium bis(pentafluoroethanesulfonyl)imide, LiBETI), and LiN(SO₂CF₃)₂ (lithium bis(trifluoromethanesulfonyl)imide, LiTFSI) or a mixture of two or more thereof. In addition to them, a lithium salt commonly used in an electrolyte solution of a lithium secondary battery may be used without limitation.

The lithium salt may be appropriately changed in a normally usable range, but may be included in a concentration of 0.8 M to 4.0 M, specifically, 1.0 M to 3.0 M in the electrolyte solution to obtain an optimum effect of forming a film for preventing corrosion of the surface of the electrode.

In a case in which the concentration of the lithium salt is within the above range, viscosity of the non-aqueous electrolyte solution may be controlled to achieve optimal impregnability, and mobility of lithium ions may be improved to obtain an effect of improving capacity characteristics and cycle characteristics of the lithium secondary battery.

### (4-2) Organic Solvent

Also, a description of the organic solvent is as follows.

Various organic solvents typically used in a non-aqueous electrolyte solution may be used as the non-aqueous organic solvent without limitation, wherein a type thereof is not limited as long as decomposition due to an oxidation reaction during charge and discharge of the secondary battery may be minimized and desired properties may be exhibited together with an additive.

Specifically, the non-aqueous organic solvent may include (i) a cyclic carbonate-based organic solvent,(ii) a linear carbonate-based organic solvent, or (iii) a mixed organic solvent thereof.

The (i) cyclic carbonate-based organic solvent is a highly viscous organic solvent which well dissociates the lithium salt in the non-aqueous electrolyte solution due to high permittivity, wherein specific examples of the cyclic carbonate-based organic solvent may be at least one organic solvent selected from the group consisting of ethylene carbonate (EC),propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one of ethylene carbonate and propylene carbonate.

The (ii) linear carbonate-based organic solvent is an organic solvent having low viscosity and low permittivity, wherein specific examples of the linear carbonate-based organic solvent may be at least one selected from the group consisting of dimethyl carbonate (DMC),diethyl carbonate (DEC),dipropyl carbonate,ethylmethyl carbonate (EMC), methylpropyl carbonate, and ethylpropyl carbonate, and the linear carbonate-based organic solvent may specifically include one of dimethyl carbonate and ethylmethyl carbonate.

Also, in order to ensure high ionic conductivity, the (i) cyclic carbonate-based organic solvent and the (ii) linear carbonate-based organic solvent may be used by being mixed in a volume ratio of 10:90 to 50:50, specifically,20:80 to 40:60.

Furthermore, the ionic conductivity of the non-aqueous electrolyte solution according to the present disclosure may be further improved by additionally including at least one organic solvent of (iv) a linear ester-based organic solvent and (v) a cyclic ester-based organic solvent, which have a lower melting point and higher stability at high temperature than the cyclic carbonate-based organic solvent and/or the linear carbonate-based organic solvent.

Representative examples of the (iv) linear ester-based organic solvent may be at least one organic solvent selected from the group consisting of methyl acetate, ethyl acetate, propyl acetate, methyl propionate, ethyl propionate, propyl propionate, and butyl propionate, and the (iv) linear ester-based organic solvent may specifically include at least one of ethyl propionate and propyl propionate.

The (v) cyclic ester-based organic solvent may include at least one selected from the group consisting of γ-butyrolactone, γ-valerolactone, γ-caprolactone, σ-valerolactone, and ε-caprolactone.

An organic solvent commonly used in an electrolyte solution for a lithium secondary battery may be added without limitation and used as the organic solvent, if necessary. For example, at least one organic solvent of an ether-based organic solvent, an amide-based organic solvent, and a nitrile-based organic solvent may be further included.

A remainder excluding the lithium salt, the additive, and other additives in the non-aqueous electrolyte solution of the present disclosure may all be the organic solvent unless otherwise stated.

### (4-3) Additive

A compound represented by the following Formula 1 may be included as an additive. 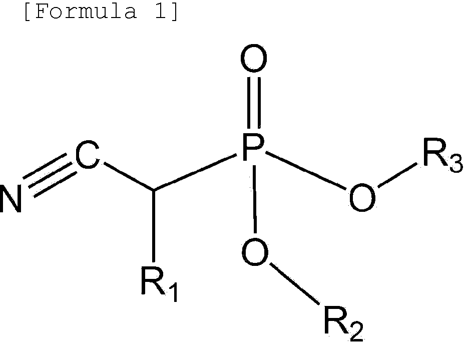 wherein, in Formula 1,
R₁ to R₃ are each independently hydrogen or an alkyl group having 1 to 10 carbon atoms.

As described above, with respect to the negative electrode including the silicon-based negative electrode active material, an SEI film containing a large amount of oxygen (O)-rich components is formed on the surface of the negative electrode by the reaction with the electrolyte solution. Thus, in order to stably maintain the SEI film, it is required to use an additive capable of suppressing the formation of the Lewis acid, such as HF or PF₅, in the electrolyte solution or removing (or scavenging) the formed Lewis acid.

Since the compound represented by Formula 1 may form an inorganic component film on the surface of the negative electrode including the silicon-based negative electrode active material by including a phosphonate (-PO(OR)₂) group in its structure, it may prevent Si degradation by HF and the resulting capacity loss and may mitigate consumption of the electrolyte and an increase in thickness of the film due to decomposition and regeneration of the SEI film. Also, since the compound represented by Formula 1 contains an alkoxy group unsubstituted with fluorine as an end group, removal of the end group at high temperature and high potential may be prevented, and thus, a side reaction caused by the removed substituent, for example, gas generation may be suppressed. Furthermore, since the compound represented by Formula 1 includes a cyanide (-CN) functional group in the structure, it may form a stable CEI film on the surface of the positive electrode by forming a ligand with the transition metal, and thus, it may prevent a side reaction between the positive electrode and the electrolyte during high-temperature storage and may suppress metal dissolution.

Thus, in a case in which the non-aqueous electrolyte solution containing the compound represented by Formula 1 as the non-aqueous electrolyte solution additive is used, a lithium secondary battery capable of achieving excellent cycle characteristics and high-temperature storage stability may be prepared.

In Formula 1, in a case in which R₁ to R₃ are each independently an alkyl group having more than 10 carbon atoms, solubility in the organic solvent may be increased due to an increase in molecular structure and molecular weight of the compound, and electrolyte impregnability may be reduced due to an increase in electrolyte viscosity. Also, in Formula 1, in the case that R₁ to R₃ are each independently an alkyl group having more than 10 carbon atoms, a gas generation amount may be increased during the occurrence of an additive decomposition reaction in which an oxygen-phosphorus bond, an oxygen-carbon bond, or a carbon-carbon bond is broken during charge and discharge.

Specifically, in Formula 1, R₁ to R₃ may each independently be an alkyl group having 1 to 8 carbon atoms.

Also, R₁ may be an alkyl group having 1 to 5 carbon atoms, and R₂ and R₃ may each independently be an alkyl group having 2 to 6 carbon atoms.

Furthermore, R₁ may be an alkyl group having 1 to 3 carbon atoms, and R₂ and R₃ may each independently be an alkyl group having 2 to 5 carbon atoms.

More specifically, the compound represented by Formula 1 may include a compound represented by Formula 1a below.

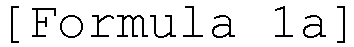

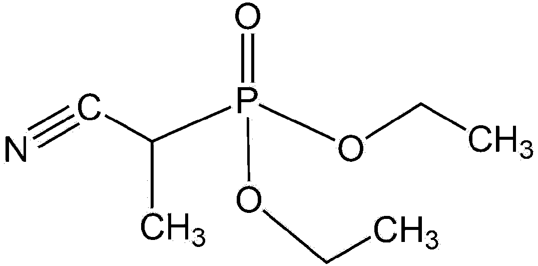

The compound of Formula 1 may be present in an amount of 0.1 wt% to 5.0 wt% based on a total weight of the non-aqueous electrolyte solution.

If the compound represented by Formula 1 is present in the above range, since the compound may effectively prevent degradation of the negative electrode during rapid charge and discharge by forming a robust film on the negative electrode and the positive electrode while preventing the side reaction due to the additive, a secondary battery with improved overall performance may be prepared. Specifically, if the amount of the compound represented by Formula 1 is 0.1 wt% or more, an effect of forming the film on the surfaces of the negative electrode and positive electrode and an effect of scavenging a thermal decomposition product, such as HF or PF₅, of the lithium salt during battery operation may be more stably maintained. Also, in a case in which the amount of the compound represented by Formula 1 is 5.0 wt% or less, the viscosity of the non-aqueous electrolyte solution may be controlled to achieve the optimal impregnability, an increase in battery resistance due to the decomposition of the additive may be effectively suppressed, and degradation of rate capability or low-temperature life characteristics may be prevented because ionic conductivity of the electrolyte is not reduced.

Specifically, the compound represented by Formula 1 may be present in an amount of 0.1 wt% to 3.0 wt%, more preferably,0.3 wt% to 1.0 wt%.

### (4-4) Other Additives

The non-aqueous electrolyte solution may further include other additives in the non-aqueous electrolyte solution, if necessary, in order to prevent the occurrence of collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

As a representative example, the other additives may include at least one other additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of 1,3-propane sultone (PS),1,4-butane sultone, ethane sultone, 1,3-propene sultone (PRS), 1,4-butene sultone, and 1-methyl-1,3-propenesultone.

The sulfate-based compound may include ethylene sulfate (Esa), trimethylene sulfate (TMS),or methyl trimethylene sulfate (MTMS).

The phosphate-based compound may include at least one compound selected from the group consisting of lithium difluoro(bisoxalato)phosphate, lithium difluorophosphate,tris(trimethylsilyl)phosphate,tris(2,2,2-trifluoroethyl)phosphate, and tris(trifluoroethyl)phosphate.

The borate-based compound may include tetraphenylborate and lithium oxalyldifluoroborate.

The nitrile-based compound may include at least one compound selected from the group consisting of succinonitrile, adiponitrile, acetonitrile, propionitrile, butyronitrile, valeronitrile, caprylonitrile, heptanenitrile,cyclopentanecarbonitrile, cyclohexanecarbonitrile, 2-fluorobenzonitrile, 4-fluorobenzonitrile, difluorobenzonitrile, trifluorobenzonitrile,phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte solution, wherein the lithium salt-based compound may include at least one compound selected from the group consisting of LiPO₂F₂, LiODFB, LiBOB (lithium bisoxalatoborate (LiB(C₂O₄)₂), and LiBF₄.

In a case in which vinylene carbonate, vinylethylene carbonate, or succinonitrile, among these other additives, is included, a more robust SEI film may be formed on the surface of the negative electrode during an initial activation process of the secondary battery.

Two or more types of the other additives may be mixed and used, and the other additives may be present in an amount of 50 wt% or less, particularly 0.01 wt% to 10 wt%, and preferably 0.05 wt% to 5 wt% based on the total weight of the non-aqueous electrolyte solution. If the amount of the other additives is less than 0.01 wt%, an effect of improving low-temperature output, high-temperature storage characteristics, and high-temperature life characteristics of the battery is insignificant, and, if the amount of the other additives is greater than 50 wt%, there is a possibility that the side reaction in the electrolyte solution occurs excessively during charge and discharge of the battery. Particularly, since the additives for forming an SEI may not be sufficiently decomposed at high temperatures when excessive amounts of the additives for forming an SEI film are added, the additives for forming an SEI film may be present in the form of an unreacted material or precipitates in the electrolyte solution at room temperature. Accordingly, a side reaction may occur in which life or resistance characteristics of the secondary battery are degraded.

The lithium secondary battery of the present disclosure may be prepared according to a conventional method known in the art, and may specifically be prepared by forming an electrode assembly in which the positive electrode, the negative electrode, and the separator between the positive electrode and the negative electrode are sequentially stacked, storing the electrode assembly in a battery case, and then injecting the non-aqueous electrolyte solution.

A shape of the lithium secondary battery according to the present disclosure is not particularly limited, but a cylindrical type using a can, a prismatic type, a pouch type, or a coin type may be used.

Also, the lithium secondary battery according to the present disclosure may not only be used in a battery cell that is used as a power source of a small device, but may also be used as a unit cell in a medium and large sized battery module including a plurality of battery cells. Specifically, the lithium secondary battery according to the present disclosure may be suitably used in portable devices, such as mobile phones, notebook computers, and digital cameras, and electric cars such as hybrid electric vehicles (HEVs).

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

### Examples

### Example 1.

### (Non-aqueous Electrolyte Solution Preparation)

After LiPF₆ was dissolved in an organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 0.1 wt% of the compound represented by Formula 1a, 1.0 wt% of vinylene carbonate (VC), and 0.5 wt% of 1,3-propane sultone (PS)(see Table 1 below).

### (Secondary Battery Preparation)

A lithium nickel-cobalt-manganese oxide (Li(Ni_{0.8}Mn_{0.1}Co_{0.1})O₂) as positive electrode active material particles, carbon black as a conductive agent, and polyvinylidene fluoride, as a binder, were added in a weight ratio of 97.5:1:1.5 to N-methyl-2-pyrrolidone (NMP), as a solvent, to prepare a positive electrode slurry (solid content 85.0 wt%). A 15µm thick positive electrode collector(aluminum (Al)thin film)was coated with the positive electrode slurry, dried, and roll-pressed to prepare a positive electrode.

A negative electrode active material (graphite and SiO = 95:5 weight ratio), a binder (SBR-CMC), and a conductive agent (carbon black) were added to water, as a solvent, in a weight ratio of 95:3.5:1.5 to prepare a negative electrode slurry (solid content: 60 wt%). A 6 um thick copper (Cu) thin film, as a negative electrode collector, was coated with the negative electrode slurry, dried, and then roll-pressed to prepare a negative electrode.

After an electrode assembly was prepared by disposing a polypropylene porous separator between the above-prepared positive electrode and negative electrode, the electrode assembly was accommodated in a battery case, and the above-prepared non-aqueous electrolyte solution was injected to prepare a lithium secondary battery.

### Example 2.

A lithium secondary battery was prepared in the same manner as in Example 1 except that, after LiPF₆ was dissolved in a non-aqueous organic solvent such that a concentration of the LiPF₆ was 1.0 M, a non-aqueous electrolyte solution was prepared by adding 0.5 wt% of the compound represented by Formula 1a,1.0 wt% of vinylene carbonate (VC),and 0.5 wt% of 1,3-propane sultone (PS)(see Table 1 below).

### Example 3.

A lithium secondary battery was prepared in the same manner as in Example 1 except that, after LiPF₆ was dissolved in a non-aqueous organic solvent such that a concentration of the LiPF₆ was 1.0 M, a non-aqueous electrolyte solution was prepared by adding 1.0 wt% of the compound represented by Formula 1a, 1.0 wt% of vinylene carbonate (VC),and 0.5 wt% of 1,3-propane sultone (PS)(see Table 1 below).

### Example 4.

A lithium secondary battery was prepared in the same manner as in Example 1 except that, after LiPF₆ was dissolved in a non-aqueous organic solvent such that a concentration of the LiPF₆ was 1.0 M, a non-aqueous electrolyte solution was prepared by adding 5.0 wt% of the compound represented by Formula 1a, 1.0 wt% of vinylene carbonate (VC),and 0.5 wt% of 1,3-propane sultone (PS)(see Table 1 below).

### Example 5.

A lithium secondary battery was prepared in the same manner as in Example 1 except that, after LiPF₆ was dissolved in a non-aqueous organic solvent such that a concentration of the LiPF₆ was 1.0 M, a non-aqueous electrolyte solution was prepared by adding 6.0 wt% of the compound represented by Formula 1a, 1.0 wt% of vinylene carbonate (VC),and 0.5 wt% of 1,3-propane sultone (PS)(see Table 1 below).

### Comparative Example 1.

A lithium secondary battery was prepared in the same manner as in Example 1 except that, after LiPF₆ was dissolved in a non-aqueous organic solvent such that a concentration of the LiPF₆ was 1.0 M, a non-aqueous electrolyte solution was prepared by adding 1.0 wt% of vinylene carbonate (VC) and 0.5 wt% of 1,3-propane sultone (PS) as an additive (see Table 1 below).

### Comparative Example 2.

A lithium secondary battery was prepared in the same manner as in Example 2 except that, after LiPF₆ was dissolved in a non-aqueous organic solvent such that a concentration of the LiPF₆ was 1.0 M, a non-aqueous electrolyte solution was prepared by adding 0.5 wt% of a compound represented by Formula 2 below, as an additive, instead of the compound of Formula 1a (see Table 1 below).

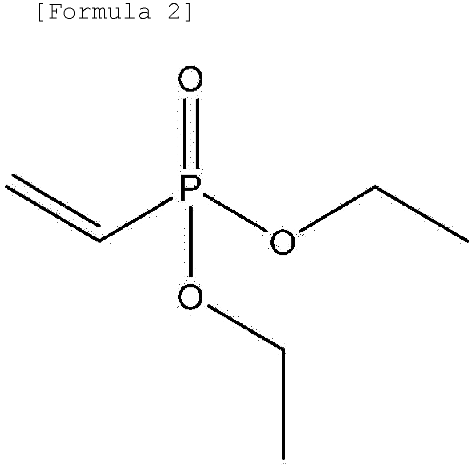

### Comparative Example 3.

A lithium secondary battery was prepared in the same manner as in Example 3 except that, after LiPF₆ was dissolved in a non-aqueous organic solvent such that a concentration of the LiPF₆ was 1.0 M, a non-aqueous electrolyte solution was prepared by adding 1.0 wt% of the compound represented by Formula 2, as an additive, instead of the compound of Formula 1a (see Table 1 below).

### Comparative Example 4.

### (Lithium Secondary Battery Preparation)

A lithium nickel-cobalt-manganese oxide (Li(Ni_{0.8}Mn_{0.1}Co_{0.1})O₂) as positive electrode active material particles, carbon black as a conductive agent, and polyvinylidene fluoride, as a binder, were added in a weight ratio of 97.5:1:1.5 to N-methyl-2-pyrrolidone (NMP), as a solvent, to prepare a positive electrode slurry (solid content 85.0 wt%) . A 15 um thick positive electrode collector(Al thin film)was coated with the positive electrode slurry, dried, and roll-pressed to prepare a positive electrode.

A negative electrode active material (graphite), a binder (SBR-CMC), and a conductive agent (carbon black) were added to water, as a solvent, in a weight ratio of 95:3.5:1.5 to prepare a negative electrode slurry (solid content: 60 wt%) . A 6 um thick copper (Cu) thin film, as a negative electrode collector, was coated with the negative electrode slurry, dried, and then roll-pressed to prepare a negative electrode.

After an electrode assembly was prepared by disposing a polypropylene porous separator between the above-prepared positive electrode and negative electrode, the electrode assembly was accommodated in a battery case.

Then, a lithium secondary battery was prepared in the same manner as in Example 1 except that the non-aqueous electrolyte solution prepared in Example 3 was injected.

**[Table 1]**

| | Non-aqueous organic solvent | Additive | | Other additives | |
|---|---|---|---|---|---|
| | | Type | Amount (wt%) | Type | Amount (wt%) |
| Example 1 | | Formula 1a | 0.1 | | |
| Example 2 | | Formula 1a | 0.5 | | |
| Example 3 | | Formula 1a | 1.0 | | |
| Example 4 | EC:EMC=3 0:70 volume ratio | Formula 1a | 5.0 | VC/PS | 1.0/0.5 |
| Example 5 | | Formula 1a | 6.0 | | |
| Comparative Example 1 | | - | - | | |
| Comparative Example 2 | | Formula 2 | 0.5 | | |
| Comparative Example 3 | | Formula 2 | 1.0 | | |
| Comparative Example 4 | | Formula 1a | 1.0 | | |

In Table 1, the abbreviation of each compound has the following meaning.

- EC:: ethylene carbonate
- EMC:: ethylmethyl carbonate
- VC:: vinylene carbonate
- PS:: 1,3-propane sultone

### Experimental Examples

### Experimental Example 1. Performance Evaluation After High-temperature Storage

Each of the lithium secondary batteries of Examples 1 to 5 and the lithium secondary batteries of Comparative Examples 1 to 4 was charged in a constant current-constant voltage (CC-CV) mode at 0.2 C to 4.2 V and was then stored in a chamber at 60°C for 30 days. After measuring an open circuit voltage (OCV) before the storage, an OCV after the 30 days of storage was measured and a change value was expressed as dOCV. Subsequently, after each secondary battery was discharged in a CC mode at 0.2C to 2.5V, gas was extracted, and a total amount of the gas generated after the high-temperature storage was set as a gas generation amount and listed in Table 2 below.

**[Table 2]**

| | Stored at 60°C for 30 days | |
|---|---|---|
| | dOCV (mV) | Gas generation amount (mL) |
| Example 1 | 101.7 | 14.9 |
| Example2 | 94.8 | 13.6 |
| Example3 | 92.4 | 13.3 |
| Example4 | 85.6 | 15.0 |
| Example5 | 84.4 | 15.5 |
| Comparative Example1 | 107.4 | 16.3 |
| Comparative Example2 | 104.6 | 15.0 |
| Comparative Example3 | 100.6 | 14.7 |
| Comparative Example 4 | 98.1 | 14.4 |

Referring to Table 2, with respect to the secondary batteries of Examples 1 to 5 in which the non-aqueous electrolyte solution containing the compound of Formula 1a was used, it may be confirmed that dOCVs and gas generation amounts were reduced in comparison to those of the secondary battery of Comparative Example 1.

Also, when comparing the secondary batteries of Examples 2 and 3 and the secondary batteries of Comparative Examples 2 and 3 which contained the same amounts of the additives, with respect to the secondary batteries of Examples 2 and 3 in which the non-aqueous electrolyte solution containing the compound of Formula 1a of the present disclosure was used, it may be confirmed that the dOCVs and the gas generation amounts were reduced in comparison to those of the secondary batteries of Comparative Examples 2 and 3.

Considering these results, since the compound of Formula 1a of the present disclosure may suppress a side reaction of the electrolyte solution during the high-temperature storage by forming a stable film on the surfaces of the negative electrode and the positive electrode, it seems that the dOCV and gas generation amount were reduced.

Furthermore, when comparing the secondary battery of Example 3 and the secondary battery of Comparative Example 4 in which the non-aqueous electrolyte solution containing the same amount of the additive was included, with respect to the secondary battery of Example 3 of the present disclosure in which the negative electrode including the silicon-based negative electrode active material was used, it may be confirmed that the dOCV was reduced and an effect of suppressing the gas generation amount was more improved in comparison to those of the secondary battery of Comparative Example 4.

### Experimental Example 2.Performance Evaluation After Rapid Charge and Discharge

After charging of the lithium secondary batteries of Examples 1 to 5 and the lithium secondary batteries of Comparative Examples 1 to 4 in a CC-CV mode at 3 C to 4.2 V and discharging the lithium secondary batteries in a CC mode at 0.2 C to 2.5 V were set as one cycle and 100 cycles of the rapid charging and discharging were performed, capacity retention (%) and resistance increase rate (%) were calculated, and the results thereof are presented in Table 3 below.

**[Table 3]**

| | Rapid charge cycle | |
|---|---|---|
| | 100 cycle capacity retention (%) | 100 cycle resistance increase rate (%) |
| Example 1 | 57.6 | 53.9 |
| Example2 | 68.3 | 42.1 |
| Example3 | 63.6 | 49.1 |
| Example4 | 53.8 | 57.1 |
| Example5 | 51.6 | 59.5 |
| Comparative Example1 | 52.7 | 57.3 |
| Comparative Example2 | 64.2 | 49.7 |
| Comparative Example3 | 63.0 | 50.4 |
| Comparative Example 4 | 55.4 | 58.2 |

Referring to Table 3, with respect to the secondary batteries of Examples 1 to 4 in which the non-aqueous electrolyte solution containing the compound of Formula 1a was used, it may be understood that better capacity retentions may be secured and resistance increase rates were reduced after the rapid charge and discharge in comparison to those of the secondary battery of Comparative Example 1.

With respect to the secondary battery of Example 5 which included the non-aqueous electrolyte solution including a somewhat large amount of the additive, it may be understood that capacity retention was slightly reduced and resistance increase rate was slightly increased in comparison to those of the secondary batteries of Examples 1 to 4 due to a side reaction of the additive.

When comparing the secondary batteries of Examples 2 and 3 and the secondary batteries of Comparative Examples 2 and 3 which contained the same amounts of the additives, with respect to the secondary batteries of Examples 2 and 3 in which the non-aqueous electrolyte solution containing the compound of Formula 1a of the present disclosure was used, it may be confirmed that the capacity retentions after the rapid charge and discharge were increased and the resistance increase rates were reduced in comparison to those of the secondary batteries of Comparative Examples 2 and 3.

Also, when comparing the secondary battery of Example 3 and the secondary battery of Comparative Example 4 in which the non-aqueous electrolyte solution containing the same amount of the additive was included, with respect to the secondary battery of Example 3 of the present disclosure in which the negative electrode including the silicon-based negative electrode active material was used, it may be confirmed that the capacity retention after the rapid charge and discharge was increased and the resistance increase rate was reduced in comparison to those of the secondary battery of Comparative Example 4.

## Claims

1. A lithium secondary battery comprising:
a positive electrode,
a negative electrode including a silicon-based negative electrode active material,
a separator disposed between the positive electrode and the negative electrode, and
a non-aqueous electrolyte solution containing a lithium salt, an organic solvent, and an additive,
wherein the additive comprises a compound represented by Formula 1: 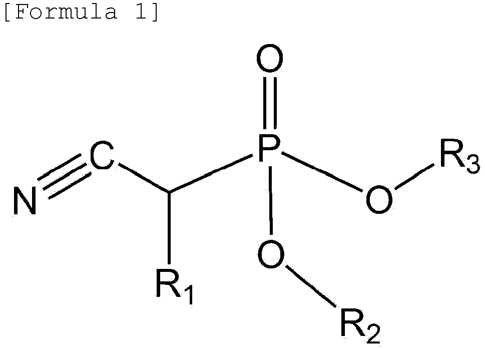
wherein, in Formula 1,
R₁ to R₃ are each independently hydrogen or an alkyl group having 1 to 10 carbon atoms.

2. The lithium secondary battery of claim 1, wherein the silicon-based negative electrode active material is at least one selected from the group consisting of silicon, silicon chloride, silicon oxide represented by SiOₓ, 0<x<2, and a silicon-carbon composite (SiC).

3. The lithium secondary battery of claim 2, wherein the silicon-based negative electrode active material is the silicon oxide (SiO).

4. The lithium secondary battery of claim 3, wherein the silicon oxide (SiO) comprises silicon dioxide (SiO₂) and amorphous silicon in a weight ratio of 1:1.

5. The lithium secondary battery of claim 1, wherein the negative electrode further comprises a carbon-based negative electrode active material.

6. The lithium secondary battery of claim 5, wherein a mixing ratio of the silicon-based negative electrode active material to the carbon-based negative electrode active material is in a range of 1:99 to 20:80, as a weight ratio.

7. The lithium secondary battery of claim 5, wherein a mixing ratio of the silicon-based negative electrode active material to the carbon-based negative electrode active material is in a range of 1:99 to 10:90, as a weight ratio.

8. The lithium secondary battery of claim 1, wherein the positive electrode comprises a positive electrode active material which includes lithium and at least one metal selected from the group consisting of nickel (Ni), cobalt (Co), manganese (Mn), and aluminum (Al).

9. The lithium secondary battery of claim 1, wherein R₁ to R₃ are each independently an alkyl group having 1 to 8 carbon atoms.

10. The lithium secondary battery of claim 1, wherein R₂ is an alkyl group having 1 to 5 carbon atoms, and
R₂ and R₃ are each independently an alkyl group having 2 to 6 carbon atoms.

11. The lithium secondary battery of claim 1, wherein R₂ is an alkyl group having 1 to 3 carbon atoms, and
R₂ and R₃ are each independently an alkyl group having 2 to 5 carbon atoms.

12. The lithium secondary battery of claim 1, wherein the compound represented by Formula 1 is a compound represented by Formula 1a:

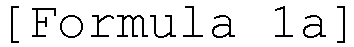

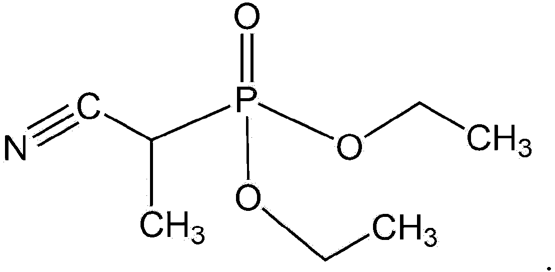

13. The lithium secondary battery of claim 1, wherein the compound represented by Formula 1 is present in an amount of 0.1 wt% to 5.0 wt% based on a total weight of the non-aqueous electrolyte solution.

14. The lithium secondary battery of claim 1, wherein the non-aqueous electrolyte solution further comprises at least one other additive selected from the group consisting of a cyclic carbonate-based compound, a halogen-substituted carbonate-based compound, a sultone-based compound, a sulfate-based compound, a phosphate-based compound, a borate-based compound, a nitrile-based compound, an amine-based compound, a silane-based compound, and a lithium salt-based compound.
